# FASCICULE DE BREVET EUROPEEN

(11) **EP 4 290 745 B1**
(45) Date de publication et mention de la délivrance du brevet: **23.04.2025**
(21) Numéro de dépôt: 23177886.1
(22) Date de dépôt: 07.06.2023
(51) Int. Cl.: H02K 11/40, E06B 9/26, E06B 9/68

(54) **ACTIONNEUR ÉLECTROMÉCANIQUE ET DISPOSITIF D'OCCULTATION COMPRENANT UN TEL ACTIONNEUR**
ELEKTROMECHANISCHER AKTUATOR UND VERDUNKELUNGSVORRICHTUNG MIT SOLCH EINEM AKTUATOR
ELECTROMECHANICAL ACTUATOR AND CONCEALMENT DEVICE COMPRISING SUCH AN ACTUATOR

(30) Priorité: 08.06.2022 FR 2205505
(43) Date de publication de la demande: 13.12.2023
(73) Titulaire: Somfy Activites SA, 74300 Cluses (FR)
(72) Inventeur: KUTRYBALA, Lukasz, 74300 CLUSES (FR); CZECH, Giovanni, 74300 CLUSES (FR); KOLEGOWICZ, Damian, 74300 CLUSES (FR); RABAHI, Nicolas, 74300 CLUSES (FR)
(74) Mandataire: Lavoix

(56) Documents cités:
- EP-A1- 3 288 054
- FR-A1- 3 116 956

## Description

La présente invention concerne un actionneur électromécanique d'un dispositif d'occultation, autrement dit un actionneur électromécanique pour un dispositif d'occultation.

La présente invention concerne également un dispositif d'occultation comprenant un rail et un écran. L'écran est entraîné en déplacement par un tel actionneur électromécanique disposé à l'intérieur du rail.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de protection solaire ou de fermeture, tel qu'un store, en particulier à lamelles, un volet, une porte, une grille, un rideau ou tout autre matériel équivalent, appelé par la suite écran.

On connaît déjà des actionneurs électromécaniques d'un dispositif d'occultation comprenant un moteur électrique, avec un stator et un rotor, une unité de contrôle, configurée pour commander le moteur électrique, un carter, dans lequel sont logés le moteur électrique et l'unité de contrôle, et un câble d'alimentation électrique, qui traverse une paroi d'extrémité du carter et qui est connecté électriquement à l'unité de contrôle. Dans ce genre de matériel, une première pièce de mise à la terre peut être utilisée pour relier électriquement le stator à la terre, à travers un conducteur du câble d'alimentation électrique.

Cependant, ces actionneurs électromécaniques présentent l'inconvénient que la pièce de mise à la terre a une géométrie complexe, en particulier en forme de fourchette, donc un coût de fabrication et de montage élevé.

En outre, une telle première pièce de mise à la terre est conçue pour un actionneur électromécanique dans lequel l'unité de contrôle et le moteur électrique sont disposés de part et d'autre d'un support mécanique, qui inclut un réducteur.

De cette manière, le stator est mis à la terre par la première pièce de mise à la terre enfichée dans le stator et mise en contact avec le support métallique.

Par ailleurs, ce support métallique est mis à la terre au moyen d'une vis traversant un œillet d'une deuxième pièce de mise à la terre montée sur une partie du carter logeant l'unité de contrôle. Cette deuxième pièce de mise à la terre est enfichée sur une prise électrique du câble d'alimentation électrique. Ceci impose à la deuxième pièce de mise à la terre de devoir résister à des branchements successifs avec la prise électrique du câble d'alimentation électrique.

Ainsi, cette approche est relativement complexe et n'est pas transposable à toutes les architectures d'actionneur électromécanique.

De cette manière, les actionneurs électromécaniques connus sont d'un prix de revient élevé et présentent des limitations qui empêchent d'adapter leur architecture en utilisant une autre répartition de leurs composants.

Par conséquent, ces actionneurs électromécaniques sont reliés électriquement à la terre au moyen de plusieurs pièces de mise à la terre complexes.

On connaît également le document EP 3 288 054 A1 qui décrit un actionneur électromécanique d'un dispositif d'occultation. L'actionneur électromécanique comprend un moteur électrique, une unité de contrôle, un carter, un câble d'alimentation électrique et une languette métallique. L'unité de contrôle est configurée pour commander le moteur électrique. Le moteur électrique et l'unité de contrôle sont logés à l'intérieur du carter. Le carter est obturé par un support de couple. Le câble d'alimentation électrique traverse le support de couple et est connecté électriquement à l'unité de contrôle. Le moteur électrique comprend un stator et un rotor. Le rotor tourne autour d'un axe de rotation. La languette métallique est reliée électriquement au carter et à un conducteur électrique du câble d'alimentation électrique, par l'intermédiaire d'une première piste électrique d'une plaquette de circuit imprimé de l'unité de contrôle. En outre, la languette métallique est une lame monobloc.

Cet actionneur électromécanique permet uniquement de mettre en oeuvre une décharge de charges électrostatiques par la circulation d'un courant électrique à partir d'un écran du dispositif d'occultation jusqu'à un réseau d'alimentation en énergie électrique, en passant par un tube d'enroulement du dispositif d'occultation, un élément de liaison, le carter de l'actionneur électromécanique, la languette métallique de liaison entre le carter et la première piste électrique de la plaquette de circuit imprimé, un éclateur, une deuxième piste électrique de la plaquette de circuit imprimé, un conducteur électrique et le conducteur électrique du câble d'alimentation électrique.

La présente invention a pour but de résoudre les inconvénients précités et de proposer un actionneur électromécanique d'un dispositif d'occultation, ainsi qu'un dispositif d'occultation comprenant un tel actionneur électromécanique, permettant de simplifier la fonction de mise à la terre du stator et de la rendre compatible avec diverses architectures d'actionneur électromécanique.

A cet effet, la présente invention concerne, selon un premier aspect, un actionneur électromécanique d'un dispositif d'occultation,
l'actionneur électromécanique comprenant au moins :
   - un moteur électrique,
   - une unité de contrôle, l'unité de contrôle étant configurée pour commander le moteur électrique,
   - un carter, le moteur électrique et l'unité de contrôle étant logés à l'intérieur du carter, le carter comprenant au moins une paroi d'extrémité,
   - un câble d'alimentation électrique, le câble d'alimentation électrique traversant la paroi d'extrémité du carter et étant connecté électriquement à l'unité de contrôle, et
   - une pièce de mise à la terre, la pièce de mise à la terre étant reliée électriquement à un conducteur électrique du câble d'alimentation électrique, la pièce de mise à la terre étant une lame de mise à la terre monobloc,
le moteur électrique comprenant au moins :
   - un stator, et
   - un rotor, le rotor tournant autour d'un axe de rotation.

Conformément à l'invention, le stator comprend au moins :
- un empilement de tôles,
- des bobinages, et
- des capots, les capots entourant les bobinages.

La pièce de mise à la terre est reliée électriquement, en outre, au stator. La pièce de mise à la terre s'étend parallèlement à l'axe de rotation, à partir de la paroi d'extrémité du carter et au moins jusqu'au niveau du capot le plus éloigné de la paroi d'extrémité, en traversant l'empilement de tôles de part en part, selon une direction parallèle à l'axe de rotation. En outre, la pièce de mise à la terre est en appui élastique, respectivement selon des directions radiales centrifuge et centripète par rapport à l'axe de rotation, contre l'empilement de tôles et contre les capots.

Ainsi, la pièce de mise à la terre peut être fabriquée de façon simple, tout en remplissant efficacement sa fonction, sans que l'unité de contrôle et le moteur électrique ne doivent forcément être positionnés de part et d'autre d'un support mécanique incluant un réducteur. Comme elle est monobloc, la pièce de mise à la terre est unique et non pas formée de plusieurs morceaux.

En particulier, une lame constituant la pièce de mise à la terre, formée par découpage et par pliage d'une bande de tôle, peut assurer une fonction de mise à la terre du stator et du carter de l'actionneur électromécanique et, éventuellement, de toute autre pièce métallique de l'actionneur électromécanique pouvant être accessible de l'extérieur de l'actionneur électromécanique, telle que, par exemple, un tronçon du carter.

De cette manière, la conception et la fabrication de l'actionneur électromécanique sont rendues plus économiques et plus faciles à faire évoluer que dans les actionneurs électromécaniques connus.

En particulier, il est possible que la pièce de mise à la terre traverse l'actionneur électromécanique à partir d'un tronçon du carter logeant un réducteur jusqu'au câble d'alimentation électrique, en passant au travers du stator et d'un autre tronçon du carter logeant l'unité de contrôle, pour être en contact avec l'ensemble des parties métalliques de l'actionneur électromécanique qui sont accessibles à partir de l'extérieur de l'actionneur électromécanique.

En outre, la pièce de mise à la terre de l'invention ne s'étend pas nécessairement jusque dans une prise électrique du câble d'alimentation électrique.

Selon des aspects avantageux mais non obligatoires de l'invention, un tel actionneur électromécanique peut incorporer une ou plusieurs des caractéristiques suivantes, prises selon toute combinaison techniquement admissible :
- L'unité de contrôle est disposée, le long de l'axe de rotation, entre le moteur électrique et la paroi d'extrémité du carter. L'actionneur électromécanique comprend, en outre, un réducteur. Le réducteur est disposé, par rapport au moteur électrique, à l'opposé de l'unité de contrôle. En outre, la pièce de mise à la terre est en contact électrique avec un tronçon du carter, dans lequel est logé le réducteur.
- Une extrémité de la pièce de mise à la terre, qui est opposée à la paroi d'extrémité du carter, est en appui contre le tronçon du carter, dans lequel est logé le réducteur, selon une direction parallèle à l'axe de rotation, ou selon une direction radiale à l'axe de rotation, ou selon une direction parallèle à l'axe de rotation et selon une direction radiale à l'axe de rotation.
- La pièce de mise à la terre est de forme longiligne aplatie.
- La pièce de mise à la terre comprend une fiche électrique, la fiche électrique étant configurée pour enficher dessus une cosse électrique terminale du conducteur électrique du câble d'alimentation électrique.
- La pièce de mise à la terre comprend au moins deux zones, chacune des zones étant en appui contre l'empilement de tôles ou contre l'un au moins des capots, alors que les zones sont galbées dans deux directions opposées.
- La pièce de mise à la terre comprend une première zone, une deuxième zone et une troisième zone. La première zone est galbée selon une première direction. La première zone est disposée, selon un axe longitudinal de la pièce de mise à la terre, entre la deuxième zone et la troisième zone. Les deuxième et troisième zones sont galbées selon une deuxième direction, opposée à la première direction.
- Une première extrémité de la pièce de mise à la terre, qui est en contact avec la paroi d'extrémité du carter, est configurée pour immobiliser la pièce de mise à la terre par rapport au carter.
- La pièce de mise à la terre traverse un logement ménagé dans l'empilement de tôles, alors que le logement est formé par une succession de lumières ménagées respectivement dans l'une des tôles de l'empilement de tôles et alignées selon une direction parallèle à l'axe de rotation.

La présente invention concerne, selon un deuxième aspect, un dispositif d'occultation,
le dispositif d'occultation comprenant au moins :
- un rail,
- un écran, et
- un actionneur électromécanique conforme à l'invention et tel que mentionné ci-dessus, l'actionneur électromécanique étant disposé à l'intérieur du rail, l'écran étant entraîné en déplacement par l'actionneur électromécanique.

D'autres particularités et avantages de l'invention apparaîtront encore dans la description ci-après, donnée à titre d'exemple non limitatif et faite en référence aux dessins annexés, dans lesquels :
[Fig 1] la figure 1 est une vue schématique en perspective d'un dispositif d'occultation conforme à un mode de réalisation de l'invention ;
[Fig 2] la figure 2 est une vue schématique en perspective d'un actionneur électromécanique du dispositif d'occultation illustré à la figure 1 ;
[Fig 3] la figure 3 est une vue schématique en perspective de l'actionneur électromécanique de la figure 2, vue selon un autre angle, des tronçons de carter étant omis pour montrer certains composants internes de l'actionneur électromécanique ;
[Fig 4] la figure 4 est une première coupe schématique axiale partielle en perspective de l'actionneur électromécanique illustré aux figures 2 et 3, selon le plan IV représenté à la figure 3, les tronçons de carter étant représentés ;
[Fig 5] la figure 5 est une deuxième coupe schématique axiale partielle en perspective de l'actionneur électromécanique illustré aux figures 2 et 3, selon le plan V représenté à la figure 3, les tronçons de carter étant représentés ;
[Fig 6] la figure 6 est une vue schématique en perspective d'une partie de l'actionneur électromécanique illustré aux figures 2 à 5, dans le sens de la flèche VI représentée à la figure 3, un tronçon de carter étant omis ; et
[Fig 7] la figure 7 représente sur trois inserts A), B) et C), respectivement en perspective, en vue de côté et en vue de dessus, une pièce de mise à la terre de l'actionneur électromécanique illustré aux figures 2 à 6.

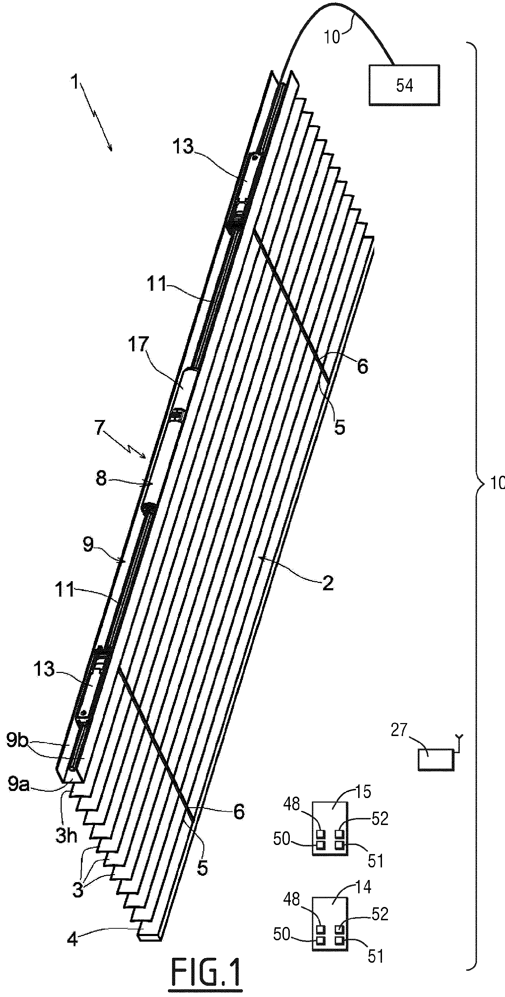

On décrit tout d'abord, en référence à la figure 1, une installation 100 installée dans un bâtiment, non représenté. Cette installation 100 comporte une ouverture, fenêtre ou porte, équipée d'un écran 2 appartenant à un dispositif d'occultation 1, conforme à un mode de réalisation de l'invention, dans l'exemple un dispositif d'occultation 1 de type store vénitien formant un store à lamelles.

En variante, non représentée, le dispositif d'occultation 1 peut être, notamment, un store plissé, un volet roulant, un portail roulant, une grille ou une porte.

Le dispositif d'occultation 1 est, préférentiellement, disposé à l'extérieur du bâtiment.

En variante, le dispositif d'occultation 1 est disposé à l'intérieur du bâtiment.

Le dispositif d'occultation 1 comprend des lamelles 3, en particulier orientables. Le dispositif d'occultation 1 comprend, en outre, une barre de charge 4. Ici, l'écran 2 est formé des lamelles 3 et de la barre de charge 4. La barre de charge 4 permet d'exercer une tension sur l'écran 2.

En pratique, la barre de charge 4 est fixée au niveau d'une extrémité inférieure de l'écran 2, en particulier dans une configuration assemblée du dispositif d'occultation 1 dans l'installation 100.

En variante, non représentée, l'écran 2 comprend une lamelle finale en remplacement de la barre de charge 4, celle-ci pouvant être lestée.

Le dispositif d'occultation 1 comprend des cordons d'entraînement 5 configurés pour permettre un déplacement vertical des lamelles 3 et de la barre de charge 4. Les cordons d'entraînement 5 peuvent également être appelés des lacettes.

En pratique, les lamelles 3 comprennent respectivement des ouvertures, non représentées, de passage de chaque cordon d'entraînement 5.

Dans l'exemple de réalisation illustré à la figure 1, le dispositif d'occultation 1 comprend, en outre, des cordons d'orientation 6 configurés pour permettre l'orientation des lamelles 3. Les cordons d'orientation 6 sont également appelés échelles.

Avantageusement, dans la configuration assemblée du dispositif d'occultation 1 dans l'installation 100, chaque lamelle 3 de l'écran 2 repose sur une partie de cordon d'orientation 6, en particulier horizontale et pouvant être appelée barreau, reliant deux brins de cordon d'orientation 6, en particulier verticaux.

Ainsi, les cordons d'orientation 6 permettent de garantir un espacement vertical régulier des lamelles 3 de l'écran 2.

L'orientation des lamelles 3 permet, notamment, d'ajuster la luminosité à l'intérieur d'une pièce du bâtiment.

Lors de la remontée de l'écran 2 et, en particulier, de la barre de charge 4, les lamelles 3 se superposent sur la barre de charge 4, de sorte à former un empilement.

Dans un exemple de réalisation, non représenté, le dispositif d'occultation 1 comprend deux coulisses. Chacune des coulisses est disposée le long d'un côté de l'écran 2 du dispositif d'occultation 1. Les coulisses sont configurées pour coopérer avec les lamelles 3 de l'écran 2, de sorte à guider les lamelles 3, lors du déploiement et du repli de l'écran 2.

Dans un autre exemple de réalisation, également non représenté, le guidage des lamelles 3 est réalisé par deux câbles. Chacun des câbles est disposé le long d'un côté de l'écran 2 du dispositif d'occultation 1.

Le dispositif d'occultation 1 comprend un dispositif d'entraînement motorisé 7.

Le dispositif d'entraînement motorisé 7 comprend au moins un actionneur électromécanique 8. L'actionneur électromécanique 8 est configuré pour entraîner, autrement dit entraîne, en déplacement l'écran 2. En particulier, l'actionneur électromécanique 8 permet de faire descendre ou monter les lamelles 3 et la barre de charge 4, autrement dit de déployer ou de replier l'écran 2, selon un mouvement vertical. L'actionneur électromécanique 8 permet, en outre, d'orienter les lamelles 3.

Le dispositif d'occultation 1 comprend, en outre, un rail 9, à l'intérieur duquel est disposé le dispositif d'entraînement motorisé 7, notamment l'actionneur électromécanique 8, en particulier dans une configuration assemblée du dispositif d'occultation 1.

Le rail 9 est disposé, autrement dit est configuré pour être disposé, au-dessus de l'écran 2, en particulier dans la configuration assemblée du dispositif d'occultation 1.

De manière générale, le rail 9 est disposé au-dessus de l'ouverture du bâtiment, ou encore en partie supérieure de l'ouverture du bâtiment.

Avantageusement, le rail 9 comprend au moins une paroi de fond 9a et deux parois latérales 9b.

Dans le mode de montage illustré à la figure 1, le rail 9 présente une section en forme de « U ».

Avantageusement, le dispositif d'entraînement motorisé 7 comprend, en outre, une pluralité d'enrouleurs. Les enrouleurs sont configurés pour enrouler et dérouler les cordons d'entraînement 5, de sorte à entraîner le déplacement vertical des lamelles 3 et de la barre de charge 4.

Ici, le dispositif d'entraînement motorisé 7 comprend deux enrouleurs, non visibles sur la figure 1.

Le nombre d'enrouleurs n'est pas limitatif et peut être différent, en particulier supérieur à deux.

Préférentiellement, les enrouleurs sont disposés à l'intérieur du rail 9.

Les cordons d'entraînement 5 sont reliés, d'une part, à la barre de charge 4 et, d'autre part, aux enrouleurs.

En pratique, dans la configuration assemblée du dispositif d'occultation 1 dans l'installation 100, l'extrémité inférieure de chaque cordon d'entraînement 5 est reliée à la barre de charge 4 et l'extrémité supérieure de chaque cordon d'entraînement 5 est reliée à l'un des enrouleurs.

Avantageusement, le dispositif d'entraînement motorisé 7 comprend des dispositifs de basculement 13, généralement dénommés « basculateurs ». Chaque enrouleur est respectivement disposé à l'intérieur d'un basculateur 13. C'est pourquoi les enrouleurs ne sont pas visibles à la figure 1.

En outre, les basculateurs 13 sont disposés, autrement dit sont configurés pour être disposés, à l'intérieur du rail 9, en particulier dans la configuration assemblée du dispositif d'occultation 1.

Dans l'exemple de réalisation illustré à la figure 1, le dispositif d'entraînement motorisé 7 comprend deux basculateurs 13.

Le nombre de basculateurs n'est pas limitatif et peut être différent, en particulier strictement supérieur à deux. Dans le cas où le nombre de basculateurs est supérieur ou égal à deux, l'actionneur électromécanique peut être disposé entre deux des basculateurs.

Ici, les basculateurs 13 sont disposés de part et d'autre de l'actionneur électromécanique 8. Préférentiellement, chaque basculateur 13 est disposé au voisinage d'une extrémité du rail 9, suivant la direction longitudinale de celui-ci.

Les basculateurs 13 sont configurés pour entraîner en rotation, sur une plage de valeur d'angle de rotation limitée, les cordons d'orientation 6, de sorte à orienter les lamelles 3.

Le dispositif d'entraînement motorisé 7, en particulier l'actionneur électromécanique 8, est commandé par une unité de commande. Autrement dit, l'unité de commande est configurée pour commander, c'est-à-dire commande, le dispositif d'entraînement motorisé 7, en particulier l'actionneur électromécanique 8.

L'unité de commande peut être, par exemple, une unité de commande locale 14 ou une unité de commande centrale 15.

L'unité de commande locale 14 peut être reliée, en liaison filaire ou non filaire, avec l'unité de commande centrale 15. L'unité de commande centrale 15 peut piloter l'unité de commande locale 14, ainsi que d'autres unités de commande locales similaires et réparties dans le bâtiment.

Le dispositif d'entraînement motorisé 7 est, de préférence, configuré pour exécuter les commandes de déplacement, notamment de montée ou descente et, éventuellement, d'orientation, de l'écran 2 du dispositif d'occultation 1, pouvant être émises, notamment, par l'unité de commande locale 14 ou l'unité de commande centrale 15.

L'installation 100 et, plus particulièrement, le dispositif d'occultation 1 comprend soit l'unité de commande locale 14, soit l'unité de commande centrale 15, soit l'unité de commande locale 14 et l'unité de commande centrale 15.

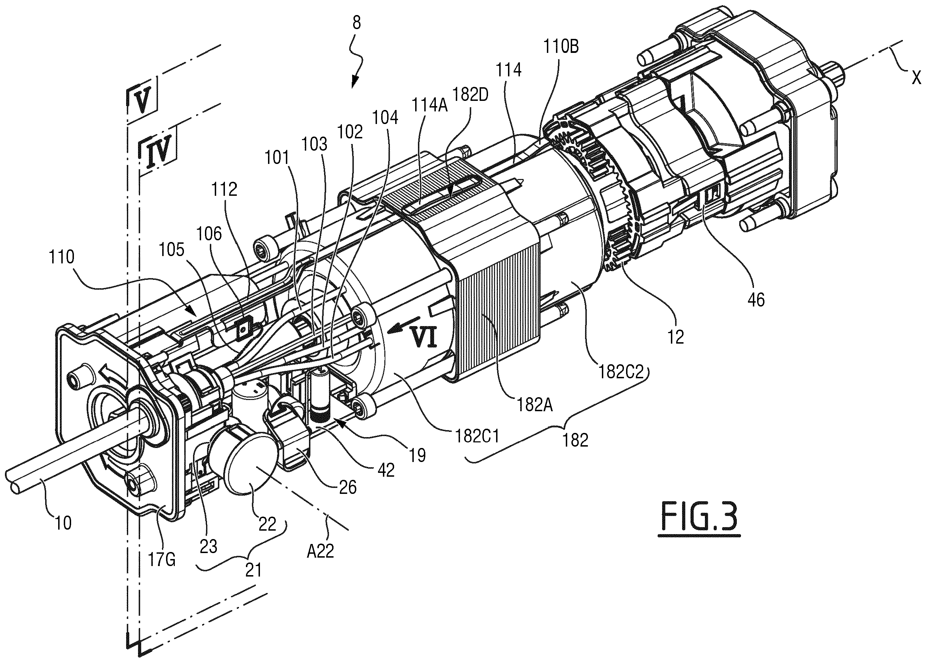

Des moyens de commande de l'actionneur électromécanique 8, permettant le déplacement de l'écran 2 du dispositif d'occultation 1 ainsi que l'orientation des lamelles 3 de l'écran 2, comprennent au moins une unité de contrôle 19, en particulier une unité électronique de contrôle, illustrée aux figures 3 à 6. L'unité de contrôle 19 est apte à mettre en fonctionnement un moteur électrique 18 de l'actionneur électromécanique 8 et, en particulier, permettre l'alimentation en énergie électrique du moteur électrique 18.

Avantageusement, le moteur électrique 18 peut être de type sans balais à commutation électronique, appelé également « BLDC » (acronyme du terme anglo-saxon BrushLess Direct Current) ou « synchrone à aimants permanents », de type asynchrone ou de type à courant continu.

L'unité de contrôle 19 est intégrée à l'actionneur électromécanique 8.

Ainsi, l'unité de contrôle 19 commande, notamment, le moteur électrique 18, de sorte à ouvrir ou fermer l'écran 2, ainsi que de sorte à orienter les lamelles 3 de l'écran 2, comme décrit précédemment.

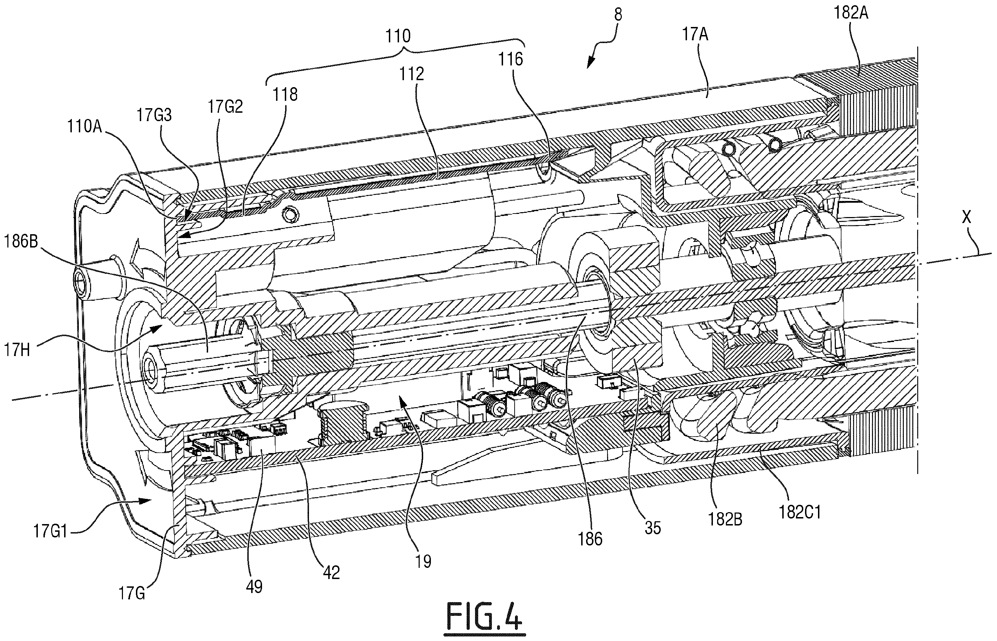

Ici, l'unité de contrôle 19 comprend une carte de circuit imprimé 42, visible aux figures 3 et 4 et qui supporte divers composants électroniques nécessaires à la commande du moteur électrique 18, dont ceux mentionnés ci-après.

En variante, non représentée, l'unité de contrôle 19 peut comprendre plusieurs cartes de circuit imprimé.

Avantageusement, l'unité de contrôle 19 comprend au moins un module de communication 49, en particulier de réception d'ordres de commande, les ordres de commande étant émis par un émetteur d'ordres, tel que l'unité de commande locale 14 ou centrale 15, ces ordres étant destinés à commander le dispositif d'entraînement motorisé 7.

Avantageusement, le module de communication 49 de l'unité de contrôle 19 est de type sans fil, autrement dit permet la réception et, éventuellement, l'émission d'ordres de commande transmis par des moyens sans fil, en particulier, des ordres de commande radioélectriques.

Avantageusement, l'unité de contrôle 19, l'unité de commande locale 14 et/ou l'unité de commande centrale 15 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité ou encore une vitesse de vent, dans le cas où la station météorologique est déportée à l'extérieur du bâtiment.

L'unité de contrôle 19, l'unité de commande locale 14 et/ou l'unité de commande centrale 15 peuvent également être en communication avec un serveur 27, de sorte à contrôler l'actionneur électromécanique 8 suivant des données mises à disposition à distance par l'intermédiaire d'un réseau de communication, en particulier un réseau internet pouvant être relié au serveur 27.

L'unité de contrôle 19 peut être commandée à partir de l'unité de commande locale 14 ou centrale 15. L'unité de commande locale 14 ou centrale 15 est pourvue d'un clavier de commande. Le clavier de commande de l'unité de commande locale 14 ou centrale 15 comprend un ou plusieurs éléments de sélection 50 et, éventuellement, un ou plusieurs éléments d'affichage 51.

A titre d'exemples nullement limitatifs, les éléments de sélection peuvent être des boutons poussoirs ou des touches sensitives, les éléments d'affichage peuvent être des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 14 ou centrale 15 comprend au moins un module de communication 48.

Ainsi, le module de communication 48 de l'unité de commande locale 14 ou centrale 15 est configuré pour émettre, autrement dit émet, des ordres de commande, en particulier par des moyens sans fil, par exemple radioélectriques.

En outre, le module de communication 48 de l'unité de commande locale 14 ou centrale 15 peut également être configuré pour recevoir, autrement dit reçoit, des ordres de commande, en particulier par l'intermédiaire des mêmes moyens.

Le module de communication 48 de l'unité de commande locale 14 ou centrale 15 est appelé par la suite premier module de communication. En outre, le module de communication 49 de l'unité de contrôle 19 est appelé par la suite deuxième module de communication.

Le premier module de communication 48 de l'unité de commande locale 14 ou centrale 15 est configuré pour communiquer, autrement dit communique, avec le deuxième module de communication 49 de l'unité de contrôle 19.

Ainsi, le premier module de communication 48 de l'unité de commande locale 14 ou centrale 15 échange des ordres de commande avec le deuxième module de communication 49 de l'unité de contrôle 19, soit de manière monodirectionnelle, soit de manière bidirectionnelle.

En variante, le deuxième module de communication 49 de l'unité de contrôle 19 est configuré pour recevoir, autrement dit reçoit, et, éventuellement, pour émettre, autrement dit émet, des ordres de commande transmis par des moyens filaires. En outre, le premier module de communication 48 de l'unité de commande locale 14 ou centrale 15 est configuré pour émettre, autrement dit émet, et, éventuellement, pour recevoir, autrement dit reçoit, des ordres de commande, en particulier par des moyens filaires.

Avantageusement, l'unité de commande locale 14 est un point de commande, pouvant être fixe ou nomade. Un point de commande fixe peut être un boîtier de commande destiné à être fixé sur une façade d'un mur du bâtiment ou sur une face du cadre dormant d'une fenêtre ou d'une porte. Un point de commande nomade peut être une télécommande, un téléphone intelligent ou une tablette.

Avantageusement, l'unité de commande locale 14 ou centrale 15 comprend, en outre, un contrôleur 52.

Les moyens de commande de l'actionneur électromécanique 8 comprennent des moyens matériels et/ou logiciels.

A titre d'exemple nullement limitatif, les moyens matériels peuvent comprendre au moins un microcontrôleur 29, tel qu'illustré à la figure 4.

Le dispositif d'entraînement motorisé 7, en particulier l'unité de contrôle 19, est, de préférence, configuré pour exécuter des ordres de commande de déplacement, notamment de déploiement ou de repli de l'écran 2 du dispositif d'occultation 1, ainsi que d'orientation des lamelles 3. Ces ordres de commande peuvent être émis, notamment, par l'unité de commande locale 14 ou par l'unité de commande centrale 15.

Le dispositif d'entraînement motorisé 7 peut être contrôlé par l'utilisateur, par exemple par la réception d'un ordre de commande correspondant à un appui sur le ou l'un des éléments de sélection 50 de l'unité de commande locale 14 ou centrale 15.

Le dispositif d'entraînement motorisé 7 peut également être contrôlé automatiquement, par exemple par la réception d'un ordre de commande correspondant à au moins un signal provenant d'au moins un capteur, non représenté, et/ou à un signal provenant d'une horloge, non représentée. En variante, le capteur et/ou l'horloge peuvent être intégrés à l'unité de commande locale 14 ou à l'unité de commande centrale 15.

Le capteur et/ou l'horloge peuvent également être considérés comme correspondant à une unité de commande, en particulier une unité de commande locale 14.

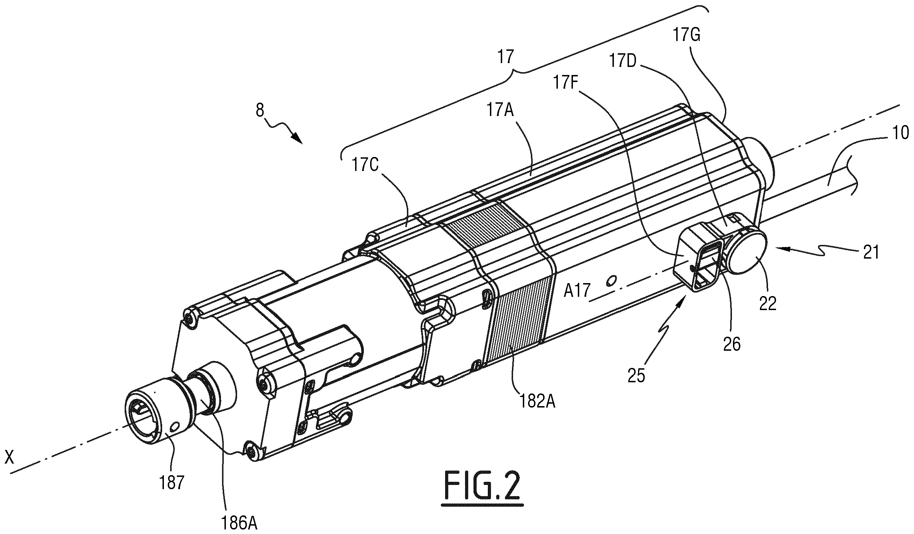

On décrit à présent, plus en détail et en référence aux figures 2 à 7, l'actionneur électromécanique 8 du dispositif d'entraînement motorisé 7 appartenant au dispositif d'occultation 1 de la figure 1.

L'actionneur électromécanique 8 comprend, entre autres, le moteur électrique 18 et l'unité de contrôle 19.

Ici, le moteur électrique 18 comprend un stator 182, un rotor 184 et un arbre de rotation 186. Le stator 182 comprend un empilement de tôles 182A et des bobinages 182B, ainsi que des capots 182C1, 182C2, qui entourent respectivement des parties des bobinages 182B de part et d'autre de l'empilement de tôles 182A. On note 182C1 un premier capot situé entre l'empilement de tôles 182A et la paroi d'extrémité 17G. On note 182C2 un deuxième capot situé à l'opposé de la paroi d'extrémité 17G, par rapport à l'empilement de tôles 182A.

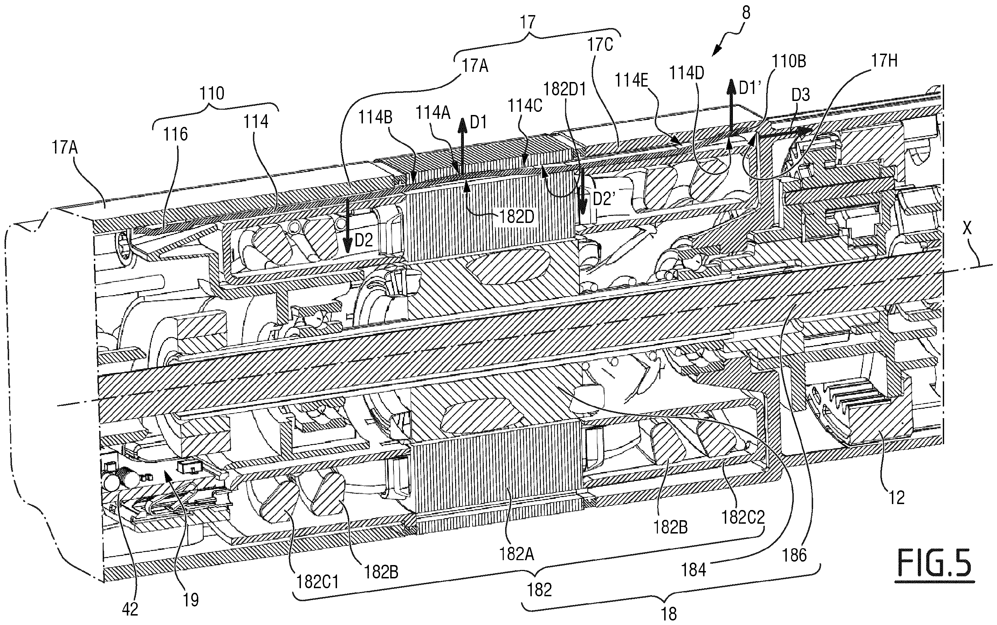

Des lumières, autrement dit des découpes, sont ménagées à travers les tôles de l'empilement de tôles 182A et sont alignées selon une direction parallèle à l'axe de rotation X. La succession de ces lumières selon l'axe de rotation X constitue un logement 182D qui traverse l'empilement de tôles 182A de part en part, selon une direction parallèle à l'axe de rotation X. Ce logement 182D est visible à la figure 3, par arrachement partiel de l'empilement de tôles 182A, ainsi qu'à la figure 5. On note 182D1 une surface radiale externe du logement 182D, c'est-à-dire la surface formée par les tranches des lumières des tôles qui délimitent ce logement 182D selon une direction radiale centrifuge par rapport à l'axe de rotation X.

L'arbre de rotation 186 est solidaire du rotor 184. L'arbre de rotation 186 est configuré pour être entraîné en rotation, autrement dit est entraîné en rotation, autour d'un axe de rotation X. Ici, l'arbre de rotation 186 s'étend jusqu'aux deux extrémités opposées de l'actionneur électromécanique 8. Une première extrémité 186A de l'arbre 186 dépasse de l'actionneur électromécanique 8 et porte une douille 187 d'accouplement à un arbre d'entraînement 11 de l'un des enrouleurs. Une deuxième extrémité 186B de l'arbre 186 ne dépasse pas de l'actionneur électromécanique 8.

Chaque enrouleur est ainsi entraîné en rotation, au niveau de l'un des basculateurs 13, par l'un des arbres d'entraînement 11 couplé avec l'arbre de sortie 186 de l'actionneur électromécanique 8.

En variante, non représentée, l'arbre de rotation 186 est limité axialement à la longueur du moteur électrique 18 et connecté à deux arbres de sortie de l'actionneur électromécanique 8 qui dépassent respectivement à chacune des extrémités de celui-ci, voire à un arbre de sortie qui ne dépasse qu'à une seule extrémité de celui-ci.

Ici, le stator 182 et le rotor 184 sont positionnés de manière coaxiale autour de l'axe de rotation X. En outre, l'arbre de rotation 186 est intégré ou accouplé au rotor 184.

L'axe de rotation X est également l'axe de rotation des enrouleurs, dans une configuration montée du dispositif d'entraînement motorisé 7.

L'actionneur électromécanique 8 permet de déplacer l'écran 2 du dispositif d'occultation 1, en particulier selon un mouvement vertical, ainsi que d'orienter les lamelles de l'écran 2.

L'actionneur électromécanique 8 comprend, en outre, un câble d'alimentation électrique 10.

L'actionneur électromécanique 8 est configuré pour être alimenté, autrement dit est alimenté, en énergie électrique par une source d'énergie électrique 54, par l'intermédiaire du câble d'alimentation électrique 10.

Avantageusement, la source d'alimentation électrique principale 54 est un réseau d'alimentation électrique, notamment du secteur.

L'actionneur électromécanique 8 comprend, en outre, un carter 17, en particulier tubulaire.

Le moteur électrique 18 et l'unité de contrôle 19 sont logés, autrement dit sont montés, à l'intérieur du carter 17, en particulier dans une configuration assemblée de l'actionneur électromécanique 8.

Ici, le carter 17 de l'actionneur électromécanique 8 comprend une pluralité de tronçons, dont au moins deux tronçons désignés par les références 17A et 17C. Il est de forme parallélépipédique et, plus particulièrement, présente une section de forme globalement rectangulaire. Les tronçons 17A et 17C du carter 17 sont appelés respectivement par la suite premier tronçon et deuxième tronçon.

En variante, non représentée, le carter 17 de l'actionneur électromécanique 8 est de forme cylindrique à section circulaire.

Le câble d'alimentation électrique 10 traverse, autrement dit est configuré pour traverser, une paroi d'extrémité 17G du carter 17, en particulier dans la configuration assemblée de l'actionneur électromécanique 8. La deuxième extrémité 186B de l'arbre 186 est accessible dans un logement 17H ménagé autour de cette extrémité sur une face externe 17G1 de la paroi d'extrémité 17G.

L'unité de contrôle 19 est disposée, le long de l'axe de rotation X, entre la paroi d'extrémité 17G du carter 17 et le moteur électrique 18.

Le câble d'alimentation électrique 10 est connecté électriquement, autrement dit est configuré pour être connecté électriquement, à l'unité de contrôle 19, en particulier dans la configuration assemblée de l'actionneur électromécanique 8.

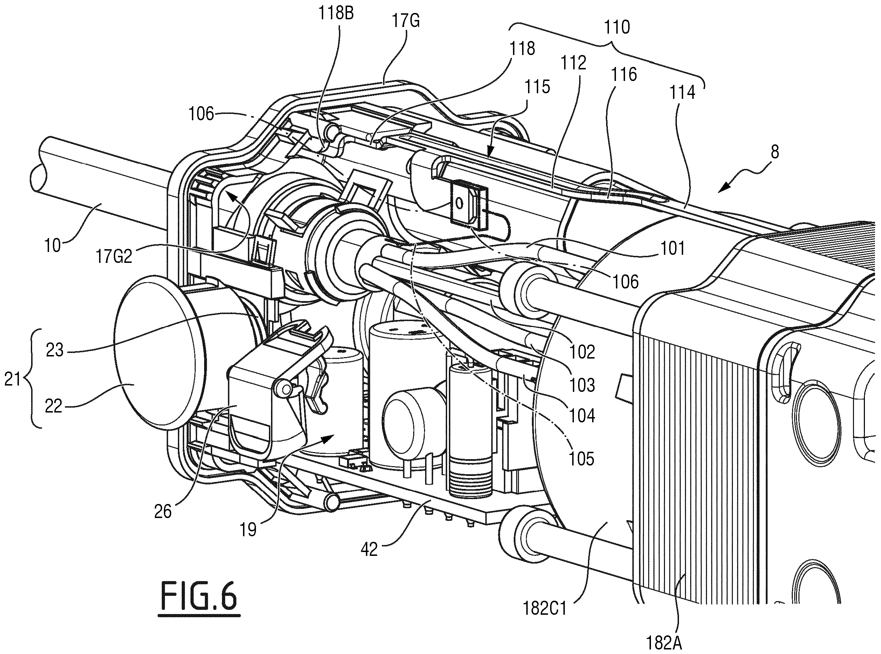

Ici, le câble d'alimentation électrique 10 comprend quatre conducteurs électriques 101, 102, 103, 104, visibles aux figures 3 et 6 et qui sont raccordés électriquement à l'unité de contrôle 19, d'une façon connue en soi qui n'est pas représentée.

En variante, le câble d'alimentation électrique 10 comprend deux, trois ou cinq conducteurs électriques, en fonction de la source d'énergie électrique 54, par exemple un réseau secteur ou un réseau Ethernet, du type de l'alimentation en énergie électrique de l'actionneur électromécanique 8, permanente ou non-permanente, et du type du courant d'alimentation électrique, alternatif ou continu.

Le câble d'alimentation électrique 10 comprend, en outre, un conducteur électrique de terre 105 représenté par un trait d'axe aux figures 3 et 6, qui est équipé d'une cosse électrique terminale 106.

Ici, la cosse électrique terminale 106 est une cosse électrique standard. Ceci permet de réduire les coûts de fabrication de l'actionneur électromécanique 8.

Avantageusement, l'actionneur électromécanique 8 comprend, en outre, au moins un réducteur 12.

Avantageusement, le réducteur 12 est disposé, par rapport au moteur électrique 18, à l'opposé de l'unité de contrôle 19.

Le réducteur 12 comprend au moins un étage de réduction. L'étage de réduction peut être un train d'engrenages de type épicycloïdal.

Le type et le nombre d'étages de réduction du sous-ensemble formant le réducteur ne sont pas limitatifs. Les étages de réduction peuvent être, par exemple, au nombre de deux ou trois.

Avantageusement, l'actionneur électromécanique 8 comprend, en outre, un frein 46, comme illustré à la figure 3.

Le frein 46 est configuré pour freiner et/ou pour bloquer en rotation l'arbre de rotation 186, de sorte à réguler la vitesse de rotation du ou de chaque arbre d'entraînement 11, lors d'un déplacement de l'écran 2, et à maintenir bloqué le ou chaque arbre d'entraînement 11, lorsque l'actionneur électromécanique 8 est désactivé électriquement.

Ici et comme visible à la figure 3, le frein 46 est configuré pour être disposé, autrement dit est disposé, entre deux étages de réduction du réducteur 12, le long de l'axe de rotation X.

En variante, non représentée, le frein 46 est configuré pour être disposé, autrement dit est disposé, en particulier dans la configuration assemblée de l'actionneur électromécanique 8, entre l'unité de contrôle 19 et le moteur électrique 18, autrement dit à l'entrée du moteur électrique 18, ou entre le réducteur 12 et la douille 187, autrement dit à la sortie du réducteur 12, ou encore entre le moteur électrique 18 et le réducteur 12, c'est-à-dire à la sortie du moteur électrique 18.

A titre d'exemples nullement limitatifs, le frein 46 peut être un frein à ressort, un frein à came, un frein magnétique ou un frein électromagnétique.

Ici, le réducteur 12 et le frein 46 sont également logés dans le carter 17 de l'actionneur électromécanique 8. Plus précisément, le réducteur 12 et le frein 46 sont logés dans le deuxième tronçon 17C du carter 17.

En variante, non représentée, le frein 46 est disposé à l'extérieur du deuxième tronçon 17C du carter 17 de l'actionneur électromécanique 8, ou le frein 46 n'est pas présent.

Avantageusement, l'actionneur électromécanique 8 comprend, en outre, un dispositif de détection de fin de course 21.

L'écran 2 comprend la pluralité de lamelles 3, dont une première lamelle 3h. La première lamelle 3h fait face à la paroi de fond 9a du rail 9, en particulier dans la configuration assemblée du dispositif d'occultation 1. Autrement dit, la première lamelle 3h de l'écran 2 correspond à la lamelle 3 supérieure de l'écran 2.

Dans le cas d'un store à lamelles, une position haute, en particulier de sécurité, correspond à une mise en appui de la première lamelle 3h de l'écran 2 contre un élément du dispositif de détection de fin de course 21.

Le dispositif de détection de fin de course 21 permet, notamment, de déterminer l'atteinte de la position de fin de course haute de l'écran 2.

Le dispositif de détection de fin de course 21 est généralement appelé « champignon ».

Une position de fin de course haute, en particulier de fonctionnement, correspond à une position de fin de course haute prédéterminée, en particulier programmée au moyen de l'unité de contrôle 19 et déterminée au moyen d'un dispositif de comptage 35, visible à la figure 4.

En outre, une position de fin de course basse correspond à une position de fin de course basse prédéterminée, en particulier programmée au moyen de l'unité de contrôle 19 et déterminée au moyen du dispositif de comptage 35, ou à la mise en appui de la barre de charge 4 contre un seuil de l'ouverture du bâtiment, ou encore au déploiement complet de l'écran 2.

Ici, le dispositif de comptage 35 peut être de type magnétique. Un tel dispositif de comptage 35 comprend au moins une roue, pouvant être assemblée sur l'arbre de rotation 186 du moteur électrique 18, et des capteurs à effet Hall, qui ne sont pas représentés en détail.

Par ailleurs, le type de dispositif de comptage 35 n'est pas limitatif et peut être différent, en particulier de type optique ou de type temporel et réalisé au travers du microcontrôleur 29 de l'unité de contrôle 19.

Avantageusement, le dispositif de détection de fin de course 21 comprend un organe 22, mobile à l'intérieur d'un premier boîtier 17D formé par une partie du carter 17, dans l'exemple monobloc avec le premier tronçon 17A du carter 17, et, éventuellement, un organe de rappel élastique 23 formé par un ressort hélicoïdal.

En variante, non représentée, le premier boîtier 17D du dispositif de détection de fin de course 21 peut être formé par une partie du carter 17 rapportée sur le premier tronçon 17A du carter 17 et fixée sur celui-ci, par exemple au moyen d'éléments de fixation par vissage ou par encliquetage élastique.

Ici, le premier boîtier 17D du dispositif de détection de fin de course 21 est cylindrique et présente une section intérieure de forme globalement circulaire.

En variante, non représentée, le premier boîtier 17D du dispositif de détection de fin de course 21 est de forme parallélépipédique.

En variante, non représentée, l'organe de rappel élastique 23 peut être différent d'un ressort hélicoïdal, par exemple un bloc de matériau élastiquement déformable.

L'organe 22 est mobile en translation selon un axe A22 radial à l'axe de rotation X.

L'organe 22 comprend une tête en saillie du premier boîtier 17D et destinée à recevoir en appui la première lamelle 3h, lorsque l'écran 2 parvient dans sa position de fin de course haute. Pour ce faire, le premier boîtier 17D et l'organe 22 sont engagés par le dessus dans une lumière, non représentée, ménagée dans la paroi de fond 9a du rail 9. Lorsqu'il est repoussé par la première lamelle 3h le long de l'axe A22, l'organe 22 actionne un interrupteur, non représenté, porté par la carte de circuit imprimé 42. Ceci permet à l'unité de contrôle 19 de détecter que l'écran 2 est en position de fin de course haute.

Dans un exemple de réalisation, le deuxième tronçon 17C du carter 17 est réalisé au moins en partie dans un matériau métallique. En outre, le premier tronçon 17A est réalisé en matériau plastique.

En variante, le premier tronçon 17A du carter 17 est réalisé au moins en partie dans un matériau métallique.

La matière du deuxième tronçon du carter de l'actionneur électromécanique n'est pas limitative et peut être différente. Il peut, en particulier, s'agir d'une matière plastique électriquement conductrice.

L'unité de contrôle 19 est configurée pour commander, autrement dit commande, le moteur électrique 18 dans un premier mode de fonctionnement, dit de commande, normal ou d'usage, où elle alimente en énergie électrique le moteur électrique 18 en fonction des mouvements de montée ou de descente de l'écran 2, ainsi que des mouvements d'orientation des lamelles 3 de l'écran 2.

L'unité de contrôle 19 est également configurée pour commander, autrement dit commande, le moteur électrique 18 dans un deuxième mode de fonctionnement, en particulier d'apprentissage, de configuration, de programmation ou de réglage, qui met en oeuvre le dispositif de comptage 35 pour déterminer et mémoriser une ou plusieurs positions de fin de course de l'écran 2.

Lors de la mise en service du dispositif d'occultation 1 et au cours de sa durée d'utilisation, il est nécessaire de faire basculer l'unité de contrôle 19 entre les premier et deuxième modes de fonctionnement.

Pour ce faire, l'actionneur électromécanique 8 comprend, en outre, un dispositif de commande de basculement 25. Le dispositif de commande de basculement 25 est configuré pour basculer, autrement dit bascule, l'unité de contrôle 19 entre les premier et deuxième modes de fonctionnement.

Le dispositif de commande de basculement 25 comprend un volet 26, monté pivotant, autour d'un axe parallèle à l'axe de rotation X, dans un deuxième boîtier 17F, formé par une partie du carter 17, dans l'exemple monobloc avec le premier tronçon 17A du carter 17.

Avantageusement, le dispositif de basculement 25 est conforme à l'enseignement technique de la demande de brevet FR 2111630, dont l'enseignement est incorporé par référence.

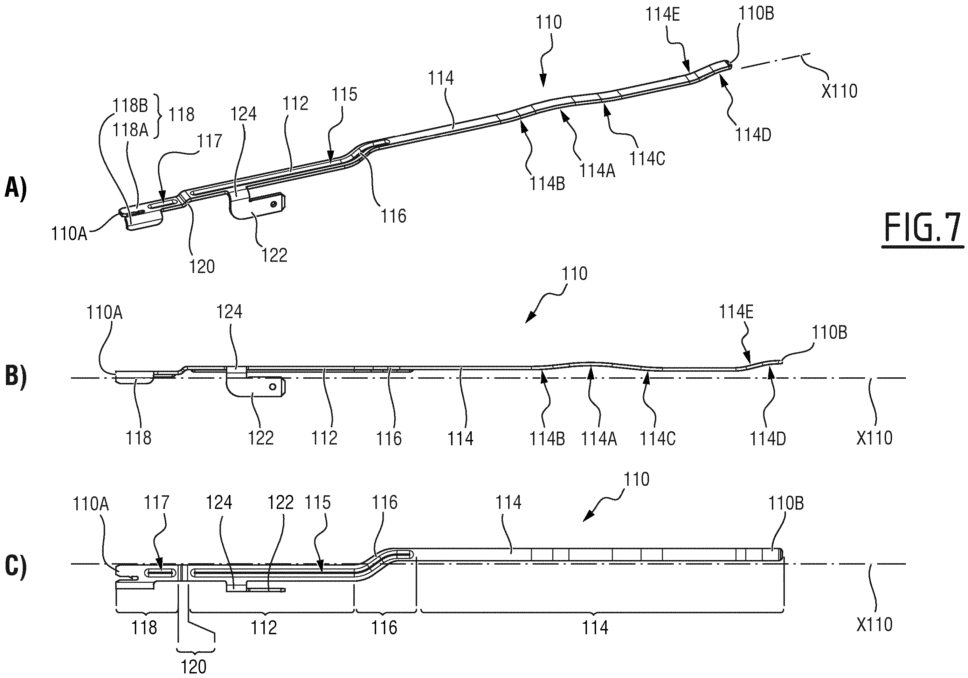

L'actionneur électromécanique 8 comprend, en outre, une pièce de mise à la terre 110 qui est représentée seule à la figure 7 et en configuration montée dans l'actionneur électromécanique 8 aux figures 3 à 6.

La pièce de mise à la terre 110 est réalisée dans un matériau électriquement conducteur, de préférence en cuivre ou en aluminium.

Cette pièce de mise à la terre 110 s'étend globalement selon un axe longitudinal X110, entre une première extrémité 110A et une deuxième extrémité 110B de la pièce de mise à la terre 110, la deuxième extrémité 110B étant opposée à la première extrémité 110A.

La première extrémité 110A est destinée à être insérée dans un logement 17G3, de forme correspondante ménagé sur une face interne 17G2 de la paroi d'extrémité 17G. Cette face interne 17G2 est tournée, à l'opposé de la face externe 17G1, vers l'unité de contrôle 19.

Avantageusement, la pièce de mise à la terre 110 est de forme longiligne aplatie.

La pièce de mise à la terre 110 est formée par une lame, autrement dit une languette, monobloc, en particulier à section rectangulaire sur la plus grande partie de sa longueur.

Avantageusement, la pièce de mise à la terre 110 comprend une première portion 112, en particulier rectiligne et parallèle à l'axe longitudinal X110, et une deuxième portion 114, en particulier rectiligne et parallèle à l'axe longitudinal X110. En outre, les première et deuxième portions 112, 114 sont reliées entre elles par une troisième portion 116, en particulier courbe et, plus particulièrement, en forme de S.

Ici, la troisième portion 116 est située, par rapport à la première extrémité 110A de la pièce de mise à la terre 110, à une distance prédéterminée de la longueur de la pièce de mise à la terre 110, pouvant être, par exemple de l'ordre de 40%. Cette longueur est mesurée entre les première et deuxième extrémités 110A, 110B de la pièce de mise à la terre 110, parallèlement à l'axe longitudinal X110.

Avantageusement, à l'opposé de la première portion 112 par rapport à la troisième portion 116, la pièce de mise à la terre 110 comprend une quatrième portion 118, dite « d'extrémité ». En outre, la quatrième portion d'extrémité 118 comprend au moins une languette, en l'occurrence deux languettes 118A, 118B, toutes deux parallèles à l'axe longitudinal X110, dans l'exemple des figures.

Ici, une première languette 118A est parallèle à la première portion 112. En outre, une deuxième languette 118B est perpendiculaire à cette première portion 112.

Avantageusement, la quatrième portion 118 est reliée à la première portion 112 par une cinquième portion 120, dite « étagée ».

Ceci induit une différence de niveau entre les première et quatrième portions 112, 118 par rapport à l'axe longitudinal X110, comme illustré à la représentation de l'insert B) de la figure 7.

Avantageusement, sur un côté de la première portion 112, il est prévu une fiche électrique 122. Cette fiche électrique 122 est configurée pour enficher dessus la cosse électrique terminale 106 du conducteur électrique de terre 105.

Ainsi, la fiche électrique 122 est une extension latérale de la première portion 112, à laquelle elle est reliée par un coude 124 à angle droit.

De cette manière, la fiche électrique 122 s'étend selon un plan perpendiculaire à la première portion 112 et est parallèle à l'axe longitudinal X110.

Avantageusement, la deuxième portion 114 comprend une première zone 114A, dite « galbée », dont la concavité est tournée vers le bas dans la représentation des inserts A) et B) de la figure 7. La deuxième portion 114 comprend, en outre, au moins une autre zone, dite « galbée », dont la concavité est orientée à l'opposé de celle de la première zone 114A, c'est-à-dire vers le haut dans les représentations des inserts A) et B) de la figure 7.

Dans l'exemple des figures, la deuxième portion 114 comprend une deuxième zone 114B et une troisième zone 114C, dites « galbées », dont la concavité est orientée à l'opposé de celle de la première zone 114A.

Avantageusement, le long de l'axe longitudinal X110, la première zone 114A est disposée entre les deuxième et troisième zones 114B, 114C.

Avantageusement, au voisinage de la deuxième extrémité 110B de la pièce de mise à la terre 110, la deuxième portion 114 comprend une quatrième zone 114D, dite « galbée », dont la concavité est orientée dans la même direction que celle de la première zone 114A, et une cinquième zone 114E, dite « galbée », dont la concavité est orientée dans la même direction que celle des deuxième et troisième zones 114B, 114C, c'est-à-dire dont la concavité est orientée à l'opposé de celle de la quatrième zone 114D.

Les première, deuxième et troisième zones 114A, 114B, 114C peuvent également être appelées première, deuxième et troisième ondulations ou première, deuxième et troisième déformations curvilignes.

La géométrie de la pièce de mise à la terre 110 lui permet, d'une part, d'être raccordée électriquement au conducteur électrique de terre 105 et, d'autre part, d'assurer une continuité électrique permettant une mise à la terre efficace du stator 182 du moteur électrique 18.

En effet, lorsque la quatrième portion 118 est insérée dans le logement 17G3, de forme correspondante de la face interne 17G2 de la paroi d'extrémité 17G, la pièce de mise à la terre 110 s'étend, avec son axe longitudinal X110 parallèle à l'axe de rotation X.

Pour ce faire, la pièce de mise à la terre 110 est avantageusement insérée dans le logement 182D, au point qu'elle traverse l'empilement de tôles 182A de part en part, selon une direction parallèle à l'axe de rotation X.

Ainsi, le logement 182D est formé par la découpe de chaque tôle de l'empilement de tôles 182A, lorsque l'empilement de tôles 182 est constitué, autrement dit est assemblé, de sorte à guider la pièce de mise à la terre 110 au travers du logement 182D de l'empilement de tôles 182A et à garantir un contact électrique de la pièce de mise à la terre 110 avec au moins l'une des surfaces du logement 182D de l'empilement de tôles 182A.

En outre, la deuxième portion 114 vient reposer, radialement par l'extérieur, contre les premier et deuxième capots 182C1, 182C2 du stator 182 et, radialement par l'intérieur, contre la surface radiale externe 182D1 du logement 182D.

En configuration montée de la pièce de mise à la terre 110 dans l'actionneur électromécanique 8, cette pièce de mise à la terre 110 s'étend à partir de la paroi d'extrémité 17G du carter 17 et au moins jusqu'au niveau du deuxième capot 182C2, qui est le plus éloigné de la paroi d'extrémité 17G parmi les premier et deuxième capots 182C1, 182C2.

En particulier, la deuxième extrémité 110B de la pièce de mise à la terre 110 vient avantageusement en appui, selon une direction parallèle à l'axe de rotation X, contre un épaulement interne 17H du deuxième tronçon 17C du carter 17, dans lequel est logé le réducteur 12.

En alternative ou en complément, la deuxième extrémité 110B de la pièce de mise à la terre 110 peut venir en contact avec le deuxième tronçon 17C du carter 17 selon une direction radiale à l'axe de rotation X. C'est le cas dans l'exemples des figures, grâce aux quatrième et cinquième zones 114D, 114E.

Ainsi, les différents appuis de la pièce de mise à la terre 110 contre les parties 182A, 182C1, 182C2 et 17C de l'actionneur électromécanique 8 proviennent de la géométrie des première, deuxième et troisième zones 114A, 114B, 114C, d'une part, et des quatrième et cinquième zones 114D, 114E, d'autre part.

De cette manière, les première, deuxième et troisième zones 114A, 114B, 114C confèrent à la deuxième portion 114 une forme non rigoureusement rectiligne selon l'axe longitudinal X110, comme illustré à la représentation de l'insert B) de la figure 7.

Ceci a pour effet de repousser élastiquement la première zone 114A contre la surface radiale externe 182D1 du logement 182D.

Inversement, du fait de l'existence des deuxième et troisième zones 114B, 114C, la partie de la deuxième portion 114, située entre la troisième portion 116 et la deuxième zone 114B, est repoussée contre le premier capot 182C1, représenté sur la gauche de la figure 5, alors que la partie de la deuxième portion 114, située entre la troisième zone 114C et la cinquième zone 114E, est repoussée contre le deuxième capot 182C2, représenté sur la droite de la figure 5.

Ainsi, un contact électrique pérenne est assuré entre la pièce de mise à la terre 110 et les parties 182A, 182C1 et 182C2 du stator 182.

Un phénomène analogue a lieu au voisinage de la deuxième extrémité 110B, grâce aux quatrième et cinquième zones 114D, 114E.

Les quatrième et cinquième zones 114D, 114E peuvent également être appelées quatrième et cinquième ondulations ou quatrième et cinquième déformations curvilignes.

À la figure 5, la pièce de mise à la terre 110 est représentée en configuration non contrainte, afin de rendre mieux visibles les première, deuxième, troisième, quatrième et cinquième zones 114A à 114E. C'est ce qui explique le chevauchement partiel entre la pièce de mise à la terre 110 et l'empilement de tôles 182A, d'une part, et avec le deuxième tronçon 17C du carter 17, d'autre part.

Avantageusement, la première zone 114A est en appui contre la surface radiale externe 182D1 du logement 182D selon une direction D1 radiale et centrifuge par rapport à l'axe de rotation X. En outre, la deuxième portion 114 de la pièce de mise à la terre 110 est en appui contre les premier et deuxième capots 182C1, 182C2, selon deux directions D2 et D2' radiales et centripètes par rapport à l'axe de rotation X.

Par ailleurs, la deuxième extrémité 110B de la pièce de mise à la terre 110 est mise en appui contre l'épaulement interne 17H du deuxième tronçon 17C du carter 17 selon une direction D3 parallèle à l'axe de rotation X et/ou selon une direction D1' radiale et centrifuge par rapport à l'axe de rotation X.

La géométrie de la quatrième portion 118 est configurée pour que la première extrémité 110A de la pièce de mise à la terre 110 immobilise la pièce de mise à la terre 110 par rapport au stator 182 et au carter 17, en particulier par rapport aux parties 182A, 182C1 et 182C2 du stator 182 et aux parties 17C et 17G du carter 17, du fait de son introduction dans le logement 17G3.

Ceci assure un contact électrique efficace et pérenne entre la pièce de mise à la terre 110 et les éléments 17 et 18 de l'actionneur électromécanique 8.

Compte tenu de sa géométrie, la pièce de mise à la terre 110 peut être réalisée par des opérations de découpage ou d'estampage et de pliage d'une bande de tôle, de préférence en cuivre ou en aluminium, avec un prix de revient particulièrement attractif.

Avantageusement, la pièce de mise à la terre 110 est pourvue d'au moins un relief de rigidification.

Dans l'exemple des figures, la pièce de mise à la terre 110 est pourvue de deux reliefs de rigidification 115, 117 formés chacun par une rainure et ménagés sur une face supérieure de la pièce de mise à la terre 110.

Ici, un premier élément de rigidification 115 s'étend sensiblement sur toute la longueur des première et troisième portions 112, 116. Ceci permet de rigidifier conjointement les première et troisième portions 112, 116, qui sont planes selon l'axe longitudinal X110, comme illustré à la représentation de l'insert B) de la figure 7, c'est-à-dire dépourvues de zone galbée.

En outre, un deuxième élément de rigidification 117 s'étend dans la quatrième portion 118. Ceci permet de rigidifier la quatrième portion 118 dans la continuité de la première portion 112.

Ni le premier élément de rigidification 115, ni le deuxième élément de rigidification 117 ne s'étend dans la cinquième portion 120, afin de ne pas diminuer la résistance mécanique de cette cinquième portion 120.

Grâce à la présente invention, la pièce de mise à la terre peut être fabriquée de façon simple, tout en remplissant efficacement sa fonction, sans que l'unité de contrôle et le moteur électrique ne doivent forcément être positionnés de part et d'autre d'un support mécanique incluant un réducteur. Comme elle est monobloc, la pièce de mise à la terre est unique et non pas formée de plusieurs morceaux.

En particulier, une lame constituant la pièce de mise à la terre, formée par découpage et par pliage d'une bande de tôle, peut assurer une fonction de mise à la terre du stator et du carter de l'actionneur électromécanique.

De cette manière, la conception et la fabrication de l'actionneur électromécanique sont rendues plus économiques et plus faciles à faire évoluer que dans les actionneurs électromécaniques connus.

En particulier, il est possible que la pièce de mise à la terre traverse l'actionneur électromécanique à partir d'un tronçon du carter logeant un réducteur jusqu'au câble d'alimentation électrique, en passant au travers du stator et d'un autre tronçon du carter logeant l'unité de contrôle, pour être en contact avec l'ensemble des parties métalliques de l'actionneur électromécanique qui sont accessibles de l'extérieur de l'actionneur électromécanique.

En outre, la pièce de mise à la terre de l'invention ne s'étend pas nécessairement jusque dans une prise électrique du câble d'alimentation électrique.

De nombreuses modifications peuvent être apportées aux exemples de réalisation décrits précédemment, sans sortir du cadre de l'invention défini par les revendications.

En variante, non représentée, de l'invention, la deuxième portion 114 de la pièce de mise à la terre 110 comprend une ondulation supplémentaire entre les deuxième et troisième zones 114B, 114C. Ceci permet que la deuxième portion 114 vienne au contact des surfaces délimitant le logement 182D en trois points, à savoir en un point du côté d'une surface radiale interne du logement 182D et en deux points du côté de la surface radiale externe 182D1 du logement 182D.

Les ondulations peuvent être de forme différente et/ou en nombre plus important, tout en garantissant le contact électrique avec les différentes parties métalliques de l'actionneur électromécanique 8, en l'occurrence l'empilement de tôles 182A, les premier et deuxièmes capots 182C1, 182C2 et, éventuellement, le deuxième tronçon 17C du carter 17.

La forme et/ou le nombre d'ondulations peuvent être déterminés pour améliorer et/ou optimiser le contact électrique avec les différentes parties métalliques de l'actionneur électromécanique.

Dans un autre exemple de réalisation, non représenté, le dispositif d'entraînement motorisé 7 comprend, outre une pluralité de premiers enrouleurs des cordons d'entraînement 5, une pluralité de deuxièmes enrouleurs des cordons d'orientation 6. Dans ce cas, les cordons d'entraînement 5 sont reliés, d'une part, à la barre de charge 4 et, d'autre part, aux premiers enrouleurs. Les cordons d'orientation 6 sont reliés, d'une part, à la barre de charge 4 et aux lamelles 3 et, d'autre part, aux deuxièmes enrouleurs. En pratique, l'extrémité inférieure de chaque cordon d'entraînement 5 est reliée à la barre de charge 4 et l'extrémité supérieure de chaque cordon d'entraînement 5 est reliée à l'un des premiers enrouleurs, en particulier dans la configuration assemblée du dispositif d'occultation 1 dans l'installation 100. L'extrémité inférieure de chaque cordon d'orientation 6 est reliée à la barre de charge 4 et l'extrémité supérieure de chaque cordon d'orientation 6 est reliée à l'un des deuxièmes enrouleurs, en particulier dans la configuration assemblée du dispositif d'occultation 1 dans l'installation 100. Préférentiellement, les premiers et deuxièmes enrouleurs sont disposés à l'intérieur du rail 9.

Dans un autre exemple de réalisation, non représenté, le dispositif d'entraînement motorisé 7 comprend deux chaînes d'entraînement et d'orientation des lamelles 3 de l'écran 2, en remplacement des cordons d'entraînement 5 et des cordons d'orientation 6. Dans un tel cas, chaque chaîne est disposée à l'intérieur de l'une des coulisses, disposée le long d'un côté de l'écran 2 du dispositif d'occultation 1.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (8) d'un dispositif d'occultation (1),
l'actionneur électromécanique (8) comprenant au moins :
- un moteur électrique (18),
- une unité de contrôle (19), l'unité de contrôle (19) étant configurée pour commander le moteur électrique (18),
- un carter (17), le moteur électrique (18) et l'unité de contrôle (19) étant logés à l'intérieur du carter (17), le carter (17) comprenant au moins une paroi d'extrémité (17G),
- un câble d'alimentation électrique (10), le câble d'alimentation électrique (10) traversant la paroi d'extrémité (17G) du carter (17) et étant connecté électriquement à l'unité de contrôle (19), et
- une pièce de mise à la terre (110), la pièce de mise à la terre (110) étant reliée électriquement à un conducteur électrique (105) du câble d'alimentation électrique (10), la pièce de mise à la terre (110) étant une lame de mise à la terre monobloc,
le moteur électrique (18) comprenant au moins :
- un stator (182), et
- un rotor (184), le rotor (184) tournant autour d'un axe de rotation (X),
**caractérisé**
**en ce que** le stator (182) comprend au moins :
- un empilement de tôles (182A),
- des bobinages (182B), et
- des capots (182C1, 182C2), les capots (182C1, 182C2) entourant les bobinages (182B),
**en ce que** la pièce de mise à la terre (110) est reliée électriquement, en outre, au stator (182),
**en ce que** la pièce de mise à la terre (110) s'étend parallèlement à l'axe de rotation (X), à partir de la paroi d'extrémité (17G) du carter (17) et au moins jusqu'au niveau du capot (182C2) le plus éloigné de la paroi d'extrémité (17G), en traversant l'empilement de tôles (182A) de part en part, selon une direction parallèle à l'axe de rotation (X),
et **en ce que** la pièce de mise à la terre (110) est en appui élastique, respectivement selon des directions radiales centrifuge (D1) et centripète (D2, D2') par rapport à l'axe de rotation (X), contre l'empilement de tôles (182A) et contre les capots (182C1, 182C2).

2. Actionneur électromécanique (8) d'un dispositif d'occultation (1) selon la revendication 1, **caractérisé**
**en ce que** l'unité de contrôle (19) est disposée, le long de l'axe de rotation (X), entre le moteur électrique (18) et la paroi d'extrémité (17G) du carter (17),
**en ce que** l'actionneur électromécanique (8) comprend, en outre, un réducteur (12),
**en ce que** le réducteur (12) est disposé, par rapport au moteur électrique (18), à l'opposé de l'unité de contrôle (19),
et **en ce que** la pièce de mise à la terre (110) est en contact électrique avec un tronçon (17C) du carter (17), dans lequel est logé le réducteur (12).

3. Actionneur électromécanique (8) d'un dispositif d'occultation (1) selon la revendication 2, **caractérisé en ce qu'**une extrémité (110B) de la pièce de mise à la terre (110), qui est opposée à la paroi d'extrémité (17G) du carter (17), est en appui contre le tronçon (17C) du carter (17), dans lequel est logé le réducteur (12), selon une direction (D3) parallèle à l'axe de rotation (X), ou selon une direction (D1') radiale à l'axe de rotation (X), ou selon une direction (D3) parallèle à l'axe de rotation (X) et selon une direction (D1') radiale à l'axe de rotation (X).

4. Actionneur électromécanique (8) d'un dispositif d'occultation (1) selon l'une quelconque des revendications 1 à 3, **caractérisé en ce que** la pièce de mise à la terre (110) est de forme longiligne aplatie.

5. Actionneur électromécanique (8) d'un dispositif d'occultation (1) selon l'une quelconque des revendications 1 à 4, **caractérisé en ce que** la pièce de mise à la terre (110) comprend une fiche électrique (122), la fiche électrique (122) étant configurée pour enficher dessus une cosse électrique terminale (106) du conducteur électrique (105) du câble d'alimentation électrique (10).

6. Actionneur électromécanique (8) d'un dispositif d'occultation (1) selon l'une quelconque des revendications 1 à 5, **caractérisé**
**en ce que** la pièce de mise à la terre (110) comprend au moins deux zones (114A, 114B, 114C), chacune des zones (114A, 114B, 114C) étant en appui contre l'empilement de tôles (182A) ou contre l'un au moins des capots (182C1, 182C2),
et **en ce que** les zones (114A, 114B, 114C) sont galbées dans deux directions opposées.

7. Actionneur électromécanique (8) d'un dispositif d'occultation (1) selon la revendication 6, **caractérisé**
**en ce que** la pièce de mise à la terre (110) comprend une première zone (114A), une deuxième zone (114B) et une troisième zone (114C),
**en ce que** la première zone (114A) est galbée selon une première direction,
**en ce que** la première zone (114A) est disposée, selon un axe longitudinal (X110) de la pièce de mise à la terre (110), entre la deuxième zone (114B) et la troisième zone (114C),
et **en ce que** les deuxième et troisième zones (114B, 114C) sont galbées selon une deuxième direction, opposée à la première direction.

8. Actionneur électromécanique (8) d'un dispositif d'occultation (1) selon la revendication 7, **caractérisé en ce qu'**une première extrémité (110A) de la pièce de mise à la terre (110), qui est en contact avec la paroi d'extrémité (17G) du carter (17), est configurée pour immobiliser la pièce de mise à la terre (110) par rapport au carter (17).

9. Actionneur électromécanique (8) d'un dispositif d'occultation (1) selon l'une quelconque des revendications 1 à 8, **caractérisé**
**en ce que** la pièce de mise à la terre (110) traverse un logement (182D) ménagé dans l'empilement de tôles (182A),
et **en ce que** le logement (182D) est formé par une succession de lumières ménagées respectivement dans l'une des tôles de l'empilement de tôles (182A) et alignées selon une direction parallèle à l'axe de rotation (X).

10. Dispositif d'occultation (1),
le dispositif d'occultation (1) comprenant au moins :
- un rail (9),
- un écran (2), et
- un actionneur électromécanique (8) conforme à l'une quelconque des revendications 1 à 9, l'actionneur électromécanique (8) étant disposé à l'intérieur du rail (9), l'écran (2) étant entraîné en déplacement par l'actionneur électromécanique (8).

## Patentansprüche

1. Elektromechanischer Aktuator (8) einer Verdunkelungsvorrichtung (1),
der elektromechanische Aktuator (8) mindestens umfassend:
- einen Elektromotor (18),
- eine Steuereinheit (19), wobei die Steuereinheit (19) konfiguriert ist, um den Elektromotor (18) zu steuern,
- ein Gehäuse (17), wobei der Elektromotor (18) und die Steuereinheit (19) im Inneren des Gehäuses (17) untergebracht sind, das Gehäuse (17) umfassend mindestens eine Endwand (17G),
- ein Stromversorgungskabel (10), wobei das Stromversorgungskabel (10) durch die Endwand (17G) des Gehäuses (17) verläuft und elektrisch mit der Steuereinheit (19) verbunden ist, und
- ein Erdungsstück (110), wobei das Erdungsstück (110) elektrisch mit einem elektrischen Leiter (105) des Stromversorgungskabels (10) verbunden ist, wobei das Erdungsstück (110) eine einstückige Erdungsklinge ist,
der Elektromotor (18), mindestens umfassend:
- einen Stator (182), und
- einen Rotor (184), wobei der Rotor (184) um eine Drehachse (X) dreht,
**dadurch gekennzeichnet,**
**dass** der Stator (182) mindestens Folgendes umfasst:
- einen Blechstapel (182A),
- Wicklungen (182B), und
- Abdeckungen (182C1, 182C2), wobei die Abdeckungen (182C1, 182C2) die Wicklungen (182B) umgeben,
**dass** das Erdungsstück (110) ferner elektrisch mit dem Stator (182) verbunden ist,
**dass** sich das Erdungsstück (110) ausgehend von der Endwand (17G) des Gehäuses (17) und mindestens bis zu der Höhe der am weitesten von der Endwand (17G) entfernten Haube (182C2) parallel zu der Drehachse (X) erstreckt, indem es den Blechstapel (182A) von einer Seite zur anderen in einer Richtung parallel zu der Drehachse (X) durchquert,
und **dass** das Erdungsstück (110) jeweils in radialen Zentrifugal- (D1) und Zentripetalrichtungen (D2, D2') in Bezug auf die Drehachse (X) elastisch gegen den Blechstapel (182A) und gegen die Abdeckungen (182C1, 182C2) anliegt.

2. Elektromechanischer Aktuator (8) für eine Verdunkelungsvorrichtung (1) nach Anspruch 1, **dadurch gekennzeichnet,**
**dass** die Steuereinheit (19) entlang der Drehachse (X) zwischen dem Elektromotor (18) und der Endwand (17G) des Gehäuses (17) angeordnet ist,
**dass** der elektromechanische Aktuator (8) ferner ein Untersetzungsgetriebe (12) umfasst,
**dass** das Untersetzungsgetriebe (12) in Bezug auf den Elektromotor (18) gegenüber der Steuereinheit (19) angeordnet ist,
und **dass** das Erdungsstück (110) in elektrischem Kontakt mit einem Abschnitt (17C) des Gehäuses (17) ist, in dem das Untersetzungsgetriebe (12) untergebracht ist.

3. Elektromechanischer Aktuator (8) einer Verdunkelungsvorrichtung (1) nach Anspruch 2, **dadurch gekennzeichnet, dass** ein Ende (110B) des Erdungsstücks (110), das der Endwand (17G) des Gehäuses (17) gegenüberliegt, an dem Abschnitt (17C) des Gehäuses (17) anliegt, in dem das Untersetzungsgetriebe (12) untergebracht ist, in einer Richtung (D3) parallel zu der Drehachse (X), oder in einer Richtung (D1') radial zu der Drehachse (X), oder in einer Richtung (D3) parallel zu der Drehachse (X) und in einer Richtung (D1') radial zu der Drehachse (X).

4. Elektromechanischer Aktuator (8) einer Verdunkelungsvorrichtung (1) nach einem der Ansprüche 1 bis 3, **dadurch gekennzeichnet, dass** das Erdungsstück (110) eine abgeflachte längliche Form aufweist.

5. Elektromechanischer Aktuator (8) einer Verdunkelungsvorrichtung (1) nach einem der Ansprüche 1 bis 4, **dadurch gekennzeichnet, dass** das Erdungsstück (110) einen elektrischen Stecker (122) umfasst, wobei der elektrische Stecker (122) konfiguriert ist, um auf eine elektrische Endklemme (106) des elektrischen Leiters (105) des Stromversorgungskabels (10) aufgesteckt zu werden.

6. Elektromechanischer Aktuator (8) einer Verdunkelungsvorrichtung (1) nach einem der Ansprüche 1 bis 5, **dadurch gekennzeichnet,**
**dass** das Erdungsstück (110) mindestens zwei Bereiche (114A, 114B, 114C) umfasst, wobei jeder der Bereiche (114A, 114B, 114C) an dem Blechstapel (182A) oder an mindestens einer der Abdeckungen (182C1, 182C2) anliegt,
und dadurch, dass die Bereiche (114A, 114B, 114C) in zwei entgegengesetzten Richtungen gewölbt sind.

7. Elektromechanischer Aktuator (8) einer Verdunkelungsvorrichtung (1) nach Anspruch 6, **dadurch gekennzeichnet,**
**dass** das Erdungsstück (110) einen ersten Bereich (114A), einen zweiten Bereich (114B) und einen dritten Bereich (114C) umfasst,
**dass** der erste Bereich (114A) in einer ersten Richtung gewölbt ist,
**dass** der erste Bereich (114A) entlang einer Längsachse (X110) des Erdungsstücks (110) zwischen dem zweiten Bereich (114B) und dem dritten Bereich (114C) angeordnet ist, und dass der zweite und der dritte Bereich (114B, 114C) entlang einer zweiten Richtung, die der ersten Richtung entgegengesetzt ist, geformt sind.

8. Elektromechanischer Aktuator (8) einer Verdunkelungsvorrichtung (1) nach Anspruch 7, **dadurch gekennzeichnet, dass** ein erstes Ende (110A) des Erdungsstücks (110), das mit der Endwand (17G) des Gehäuses (17) in Kontakt ist, konfiguriert ist, um das Erdungsstück (110) in Bezug auf das Gehäuse (17) zu halten.

9. Elektromechanischer Aktuator (8) einer Verdunkelungsvorrichtung (1) nach einem der Ansprüche 1 bis 8, **dadurch gekennzeichnet,**
**dass** das Erdungsstück (110) durch eine in dem Blechstapel (182A) gebildete Aufnahme (182D) verläuft,
und **dass** die Aufnahme (182D) durch eine Abfolge von Lumen gebildet ist, die jeweils in einem der Bleche des Blechstapels (182A) bereitgestellt sind und in einer Richtung parallel zu der Drehachse (X) ausgerichtet sind.

10. Verdunkelungsvorrichtung (1),
die Verdunkelungsvorrichtung (1) mindestens umfassend:
- eine Schiene (9),
- ein Schirm (2), und
- einen elektromechanischen Aktuator (8) nach einem der Ansprüche 1 bis 9, wobei der elektromechanische Aktuator (8) in der Schiene (9) angeordnet ist, wobei der Schirm (2) durch den elektromechanischen Aktuator (8) in Bewegung versetzt wird.

## Claims

1. An electromechanical actuator (8) of a concealment device (1),
the electromechanical actuator (8) comprising at least:
- an electric motor (18),
- a control unit (19), the control unit (19) being configured to control the electric motor (18),
- a casing (17), the electric motor (18) and the control unit (19) being housed inside the casing (17), the casing (17) comprising at least one end wall (17G),
- a power supply cable (10), the power supply cable (10) passing through the end wall (17G) of the casing (17) and being electrically connected to the control unit (19), and
- an earthing part (110), the earthing part (110) being electrically connected to an electrical conductor (105) of the power supply cable (10), the earthing part (110) being a one-piece earthing blade,
the electric motor (18) comprising at least:
- a stator (182), and
- a rotor (184), the rotor (184) rotating around an axis of rotation (X),
**characterised**
**in that** the stator (182) comprises at least:
- a stack of laminations (182A),
- windings (182B), and
- covers (182C1, 182C2), the covers (182C1, 182C2) surrounding the windings (182B),
**in that** the earthing part (110) is further electrically connected to the stator (182),
**in that** the earthing part (110) extends parallel to the axis of rotation (X), from the end wall (17G) of the casing (17) and at least as far as the level of the cover (182C2) furthest away from the end wall (17G), and passing right through the stack of laminations (182A), in a direction parallel to the axis of rotation (X),
and **in that** the earthing part (110) bears elastically, respectively in centrifugal (D1) and centripetal (D2, D2') radial directions with respect to the axis of rotation (X), against the stack of laminations (182A) and against the covers (182C1, 182C2).

2. The electromechanical actuator (8) of a concealment device (1) according to claim 1, **characterised**
**in that** the control unit (19) is arranged, along the axis of rotation (X), between the electric motor (18) and the end wall (17G) of the casing (17),
**in that** the electromechanical actuator (8) further comprises a gearbox (12),
**in that** the gearbox (12) is arranged, with respect to the electric motor (18), opposite the control unit (19),
and **in that** the earthing part (110) is in electrical contact with a section (17C) of the casing (17), in which the gearbox (12) is housed.

3. The electromechanical actuator (8) of a concealment device (1) according to claim 2, **characterised in that** one end (110B) of the earthing part (110), which is opposite the end wall (17G) of the casing (17), bears against the section (17C) of the casing (17), in which the gearbox (12) is housed, in a direction (D3) parallel to the axis of rotation (X), or in a direction (D1') radial to the axis of rotation (X), or in a direction (D3) parallel to the axis of rotation (X) and in a direction (D1') radial to the axis of rotation (X).

4. The electromechanical actuator (8) of a concealment device (1) according to any one of claims 1 to 3, **characterised in that** the earthing part (110) is of flattened elongate shape.

5. The electromechanical actuator (8) of a concealment device (1) according to any one of claims 1 to 4, **characterised in that** the earthing part (110) comprises an electrical plug (122), the electrical plug (122) being configured to plug onto it a terminal electrical lug (106) of the electrical conductor (105) of the power supply cable (10).

6. The electromechanical actuator (8) of a concealment device (1) according to any one of claims 1 to 5, **characterised**
**in that** the earthing part (110) comprises at least two zones (114A, 114B, 114C), each of the zones (114A, 114B, 114C) bearing against the stack of laminations (182A) or against at least one of the covers (182C1, 182C2),
and **in that** the zones (114A, 114B, 114C) are curved in two opposite directions.

7. The electromechanical actuator (8) of a concealment device (1) according to claim 6, **characterised**
**in that** the earthing part (110) comprises a first zone (114A), a second zone (114B) and a third zone (114C),
**in that** the first zone (114A) is curved in a first direction,
**in that** the first zone (114A) is arranged, in a longitudinal axis (X110) of the earthing part (110), between the second zone (114B) and the third zone (114C),
and **in that** the second and third zones (114B, 114C) are curved in a second direction, opposite the first direction.

8. The electromechanical actuator (8) of a concealment device (1) according to claim 7, **characterised in that** a first end (110A) of the earthing part (110), which is in contact with the end wall (17G) of the casing (17), is configured to immobilise the earthing part (110) with respect to the casing (17).

9. The electromechanical actuator (8) of a concealment device (1) according to any one of claims 1 to 8, **characterised**
**in that** the earthing part (110) passes through a housing (182D) formed in the stack of laminations (182A),
and **in that** the housing (182D) is formed by a succession of slots formed respectively in one of the laminations of the stack laminations (182A) and aligned in a direction parallel to the axis of rotation (X).

10. A concealment device (1),
the concealment device (1) comprising at least:
- a rail (9),
- a screen (2), and
- an electromechanical actuator (8) according to any one of claims 1 to 9, the electromechanical actuator (8) being arranged inside the rail (9), the screen (2) being driven in movement by the electromechanical actuator (8).
